# EUROPEAN PATENT APPLICATION

(11) **EP 2 266 381 A1**
(43) Date of publication of application: **29.12.2010**
(21) Application number: 09163485.7
(22) Date of filing: 23.06.2009
(51) Int. Cl.: A01D 41/12

(54) **Improved spreader for spreading straw and harvest residues**

(71) Applicant: Agro-Ingenjör AB, 532 32 Skara (SE)
(72) Inventor: Persson, Sven Johan, 532 32, SKARA (SE)
(74) Representative: Vink, Charlotta

(57) **Abstract**

The present invention relates to a spreader for spreading straw and other harvest residues over ground 9, comprising a straw chopper 2 having an inlet for unchopped straw and an outlet 21 for chopped straw which is essentially horizontally directed, and down streams of said outlet 21 an oscillating spreading member 14 comprising an elongate straw stream deflector which is pivotally mounted in an outlet facing end thereof and driven in an essentially horizontal plane over ground by a drive unit 31 between two end positions. The drive unit 31 is adapted to drive said spreading member 14 such that the dwell time in at least one position at or between said end positions is different than the dwell time in an other position.

## Description

### Technical field

The present invention relates to a spreader for spreading straw and other harvest residues over ground, comprising a straw chopper having an inlet for unchopped straw and an outlet for chopped straw which is essentially horizontally directed, and down streams of said outlet an oscillating spreading member comprising an elongate straw stream deflector which is pivotally mounted in an outlet facing end thereof and driven in an essentially horizontal plane over ground by a drive unit between two end positions.

### Background of the Invention

Combine harvesters are becoming increasingly large and with ever wider cutting tables to enable a field to be threshed in an effective manner. The cutting table is, in itself, essentially wider than the actual harvester. During threshing, crop residues, such as chaff and straw, are generated. Unless the straw is to be collected, it is usually chopped into small pieces in a straw chopper, before it and the chaff are distributed on the field to help provide nutrient for forthcoming crops. For a variety of reasons, it is desirable to spread the crop residues behind the combine harvester and to the sides, as evenly as possible over a region essentially corresponding to the width of the cutting table. As the cutting tables become wider, it becomes increasingly difficult to spread over the whole of the intended width. The straw chopper generates in the chopping kinetic energy, which is utilized to spread the residues over the field, and this energy is sufficient for a width of about 8 - 9 m. When the cutting tables extend beyond 9 m, this kinetic energy is not always sufficient. Especially under windy conditions and when the wind approaches the combine harvester from a side the harvest residues may not be spread in the desired manner.

By arranging fans downstream of the straw chopper, it is possible to handle and spread a larger quantity of crop residues and to do so over the larger width. EP 1 031 273 shows a combine harvester of the above-described type, which has fans for spreading the crop residues. In this solution, the outlet of the straw chopper is in the same plane as the inlets of the fans so as not to lose kinetic energy from the straw chopper. To further improve the spreading width a v-shaped oscillating spreading lever may be arranged down streams of the fans. Such a spreading lever is disclosed in the applicant's own WO 2008/156419. By re-directing the harvest residues in an oscillating manner over ground the spreading width is further improved.

The object of the invention is to provide a straw chopper having a feed-out device which enables harvest residues to be spread over as wide a width as possible, but which, at least in part, is not afflicted by the above-stated problems.

### Summary of the invention

The object of the present invention is achieved by a spreader for a combine harvester according to the claims. According to an embodiment of the invention a spreader for spreading straw and other harvest residues over ground is disclosed, comprising a straw chopper having an inlet for unchopped straw and an outlet for chopped straw which is essentially horizontally directed, and down streams of said outlet an oscillating spreading member comprising an elongate straw stream deflector which is pivotally mounted in an outlet facing end thereof and driven in an essentially horizontal plane over ground by a drive unit between two end positions. Said drive unit is adapted to drive said spreading member such that the dwell time in at least one position at or between said end positions is different than the dwell time in an other position. Hereby the user of the spreader may find an appropriate dwell time distribution, or oscillation pattern, for the spreading member that is suitable for most wind, weather and harvest conditions. It has for instance been found that an even spread of straw and other harvest residues over ground can be still further improved in relation to known spreaders if the dwell time is set longer in certain positions. Such a position may be the end positions of the oscillatory motion or a position in between the end position. The longer dwell time may *i.a.* be a complete still stand of the spreading member or merely a slower oscillatory motion along a certain part of the oscillatory path. It may also be a quicker oscillatory motion as seen in relation to the overall oscillation and dwell times.

According to one embodiment said drive unit comprises a drive shaft which at a first end is connected to said spreading member by a pivot via a lever, which lever is rigidly connected to the spreading member. This way the drive unit may be positioned arbitrarily in terms of *i.a.* position and distance away from the spreading member.

According to one embodiment adjacent to said pivot at least one side thereof a damping mechanism is provided which at its away from said pivot facing ends is fixedly fastened to said drive shaft and at is pivot facing ends is abutting said pivot. The spreader further comprises at least one blocking element positioned such that said lever in the vicinity of at least on of said end positions of said spreading member is abutting said blocking element in order to restrain the oscillation of the spreading member in said end position.

According to one embodiment said drive shaft at a second end is eccentrically connected to a driven rotor. According to one embodiment said rotor is a wheel. According to one embodiment said rotor is circular.

According to one embodiment said damping mechanism comprises a spring.

According to one embodiment the spreader comprises at least one spreader fan positioned upstreams of said spreading member. One or several spreader fans are increasing the possibility for a wide spread width and also for the control of how the spread is directed.

According to one embodiment said spreading member comprises two elongate, essentially rectangular straw stream deflectors. Such deflectors are simple and light weight and therefore the speed of oscillation of the spreading member may be increased. One advantage is consequently that an even more even spread may be accomplished.

According to one embodiment said straw stream deflectors are mounted in an essentially V-shape. This way a preset or at least adjustable angle between the two straw stream deflectors nay be chosen from either the factory or the user to set an appropriate oscillation motion.

According to one embodiment said straw stream deflectors are driven by the same drive unit to reduce costs for the design and weight for the whole apparatus.

According to one embodiment each straw stream deflector is curved in order to maximise the spread width.

According to one embodiment each straw stream deflector is mounted centrically in relation to said outlet.

According to one embodiment a combine harvester comprises a spreader according to any one of the embodiments described herein.

### Brief description of the drawings

The invention will now be described in greater detail on the basis of the following drawings. The drawings should be regarded as purely for illustrative purposes and have no limiting effect. In the drawings,
Fig. 1 shows in side view a combine harvester having a straw chopper according to one embodiment of the present invention,
Fig. 2 shows in sectioned side view the rear part of the combine harvester in Fig.1,
Fig. 3 shows a perspective view of selected parts of the combine harvester in Fig.1,
Fig. 4 shows schematically how harvest residues are spread over a field in a known manner,
Figs. 5a - 5d show schematically how harvest residues are spread over a field according to different embodiments of the present invention,
Fig. 6a - 6h schematically show different embodiments of a spreading member according to the present invention,
Fig. 7a - 7b schematically show different embodiments of a spreading member according to the present invention,
Fig. 7c is a top view of an embodiment of the present invention, and
Fig. 7d schematically shows a different embodiment of the present invention.

### Detailed description of a preferred embodiment

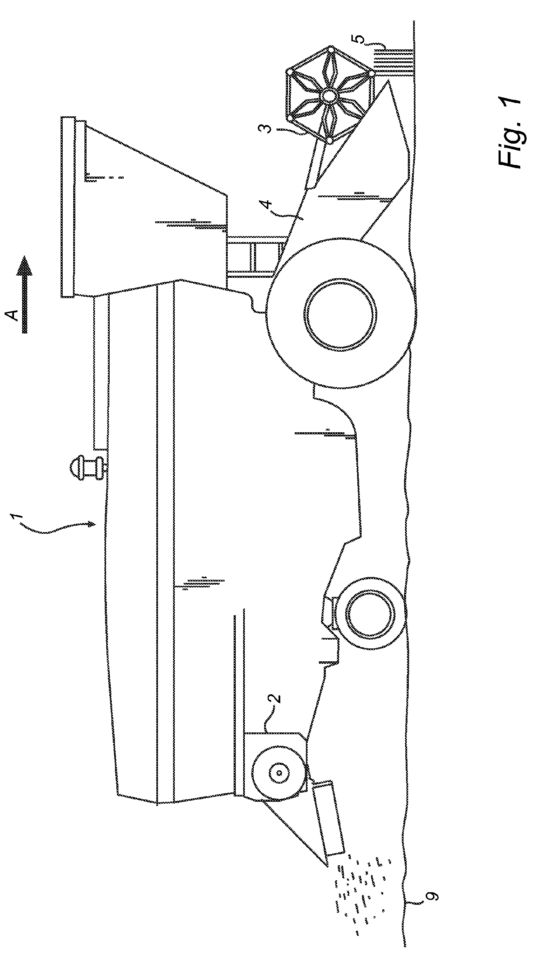

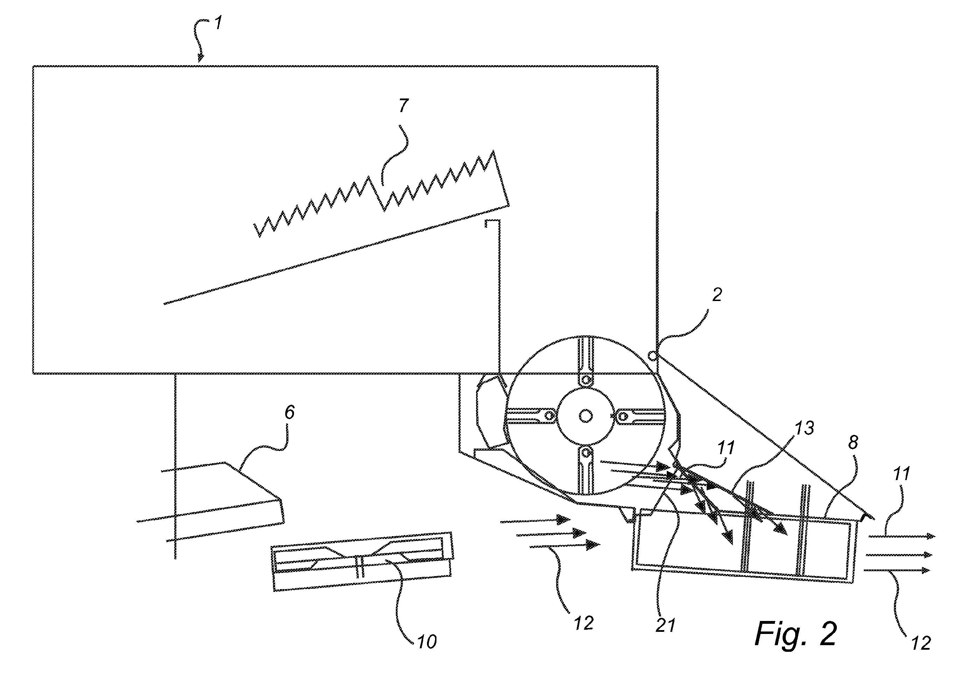

The combine harvester 1 shown in Fig. 1 is of otherwise conventional type, having a cutting table 4 with a pick-up drum 3 for gathering up straw forage 5. The cutting table 4, together with the pick-up drum 3, is 9 m and above in width, which nowadays is becoming increasingly common so as to allow a field 9 to be harvested quickly and effectively. Within the combine harvester 1 there are then devices for separating grain from stems (straw), chaff and other crop residues, see Fig. 2. These devices comprise, for example, a sieve 6 for sifting out chaff from grain, a straw walker 7 for guiding straw rearwards in the direction of travel of the combine harvester 1, and a collecting bin (not shown) for the separated grain. The straw walker could instead be a straw rotor.

In this patent application, a reference to the directions "behind" and "in front of' relates to a position behind and in front, as seen in the normal forward-directed direction of travel A of the combine harvester 1.

In the rear part of the combine harvester 1 sits the straw chopper 2, arranged in this embodiment of the invention with two symmetrically placed spreader fans 8. The straw chopper 2 is of otherwise conventional type and is arranged vertically below the rear end of the straw shaker 7. The straw chopper 2 has the task of chopping the straw if it is not to be windrowed for subsequent collection, but is instead to be spread evenly over the field 9. If the straw is chopped into smaller pieces, it is more easily ploughed back into the ground and does not stick as easily in a plough. Furthermore, it is more easily broken down and forms mull and contributes with nutrients to the next crop. It is therefore important that the spreading of the straw is even over the field and over a width corresponding to the cut width represented by the cutting table 4.

The two spreader fans 8 of the present embodiment of the invention have the task of further assisting the straw chopper 2 spreading the straw in the above-stated manner. Previous combine harvesters 1 of narrower width have not needed these, since the straw chopper 2, in the chopping operation, has given the straw sufficient velocity, or kinetic energy, to be spread over the intended width. With the new wider combine harvesters 1, this kinetic energy is insufficient, but rather additional velocity is given to the straw in the spreader fans 8. In this embodiment of the invention, the spreader fans 8 are arranged on one level vertically below and behind the straw chopper 2. The arrows 11 represent the path of the chopped straw from the straw chopper 2 and into the spreader fans 8, and out of the spreader fans 8.

Below the straw shaker 7, as seen in the vertical direction, is placed the sieve 6. Not only may the straw need to be spread evenly over the field 9, but also chaff needs to be distributed. Below the rear end portion of the sieve 6, as seen in the vertical direction, sit two symmetrically placed chaff spreader fans 10. The arrows denoted by 12 relate to the path of the chaff out of the chaff spreader fans 10 and out of the spreader fans 8, if the latter are also utilized for the spreading thereof. In an alternative but non-illustrated embodiment, the chaff spreader fans 10 can be pivoted about their axis and can instead spread the chaff at a greater or lesser angle out from the sides of the combine harvester 1. In such an embodiment, the chaff does not therefore pass through the spreader fans 8.

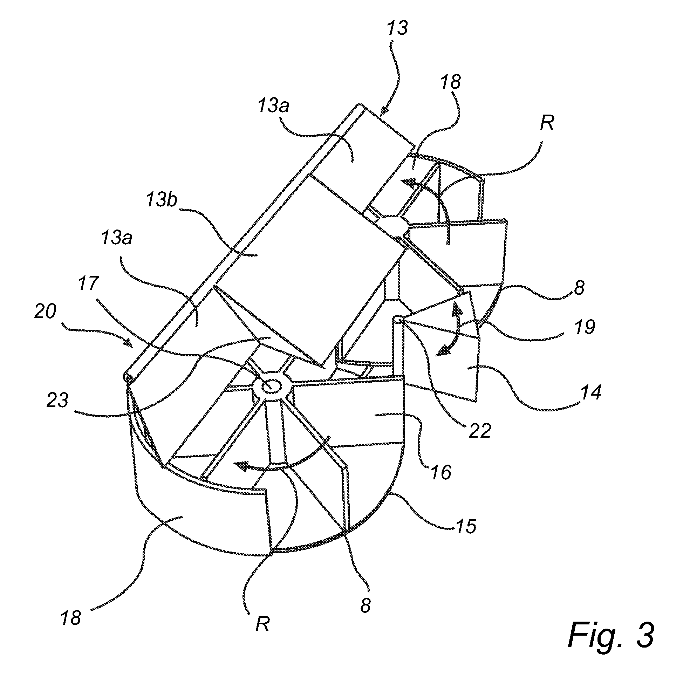

Fig. 3 shows a perspective view of only parts of the spreader fans 8 in order to illustrate their working. The two symmetrically behind the straw chopper 2 positioned spreader fans 8 sit side by side and in the same plane. They each sit suspended about a respective essentially vertical shaft 17. The fans comprise fan blades 16, which extend radially outwards from the shaft 17, and in their lower axial plane, as seen in the vertical direction, a disc 15 is disposed at the respective bottom edges of the fan blades 16. During use a cover is provided, which is not shown in the figure. An opening 20 in this cover is present in the front edge of the cover and therefore the edge facing towards the straw chopper 2. This opening 20 forms an inlet 20 for chopped straw. The opening 20 extends rearwards towards and ends close to a guide plate 13 sitting transversely to the spreader fans 8. When the guide plate 13 is connected to the opening 20, the cover's extension is such that it covers the remaining parts of the spreader fans 8. This guide plate 13 extends continuously from a level above the opening 20 downwards and rearwards towards the spreader fans 8. Its upper level, as seen in the vertical direction, is placed above the outlet opening 21 of the straw chopper 2, as seen in the vertical direction, as is shown in Fig. 2.

The guide plate 13 is divided into three portions 13a, 13b and 13a. A first portion 13a extends from one side of the combine harvester 1 towards, but not right up to, the line of symmetry of the combine harvester 1. This first portion 13a extends at least past the shaft 17 of the spreader fan 8. The second portion 13b begins where the first portion 13a ends and extends towards the other side of the combine harvester 1, but no further than up to the shaft 17 of the second spreader fan 8 at the most. There the third portion 13a then begins, which extends up to the other side of the combine harvester 1. In terms of shape and placement, the first and the third portion 13a therefore mutually correspond. Together with the second portion 13b, they therefore form a guide plate 13 symmetrical about the line of symmetry of the combine harvester 1. The difference between the three portions 13a and 13b is that they form different angles α, β to the spreader fans 8.The first and the third portion 3a thus form essentially the same angle β to the spreader fans 8, whilst the second portion 13b forms a shallower angle α than the first and third portion 13a to the spreader fans 8. In the transitions between the different portions 13a and 13b there is a sealing plate 23, which is arranged to ensure that no chopped straw from the straw chopper 2 is spread other than down into the spreader fans 8. The angle β in respect of the first and the third portion 13a forms an angle of 40 - 50 ° to the plane of rotation of the spreader fans, whilst the second portion 13b forms an angle α of 20 - 30 ° to the plane of rotation of the spreader fans.

Along the periphery of the respective spreader fan 8 there is disposed a baffle plate 18. It extends from a level adjoining the discs 15, but is not fixedly fitted to these, and vertically upwards to the level adjoining the inlet openings 20. They thus shield the spreader fans 8 in the radial direction. The baffle plates 18 run along the sides of the spreader fans 8 which face away from each other, *i.e.* on the outer sides of the combine harvester 1, and along the sides facing in the direction of travel of the combine harvester, and follow essentially the rounded shape of the spreader fans 8. One end portion of the baffle plates 18 is situated in a position directly past the respective shaft 17 in the direction of the second spreader fan 8 and viewed in the lateral direction of the combine harvester 1. The baffle plates 18 extend along the periphery of the spreader fans 8 towards the respective other end portion thereof. This other end portion is situated directly past the respective shafts 17 of the spreader fans 8 viewed in the direction of travel of the combine harvester 1, i.e. behind said shafts 17. In the preferred embodiment of the invention, this position is occupied by the baffle plates 18 and relates to a situation where the spreader fans rotate such that the straw is released from the fan blades 16 in the portion between the spreader fans 8 and that they spread the straw rearwards.

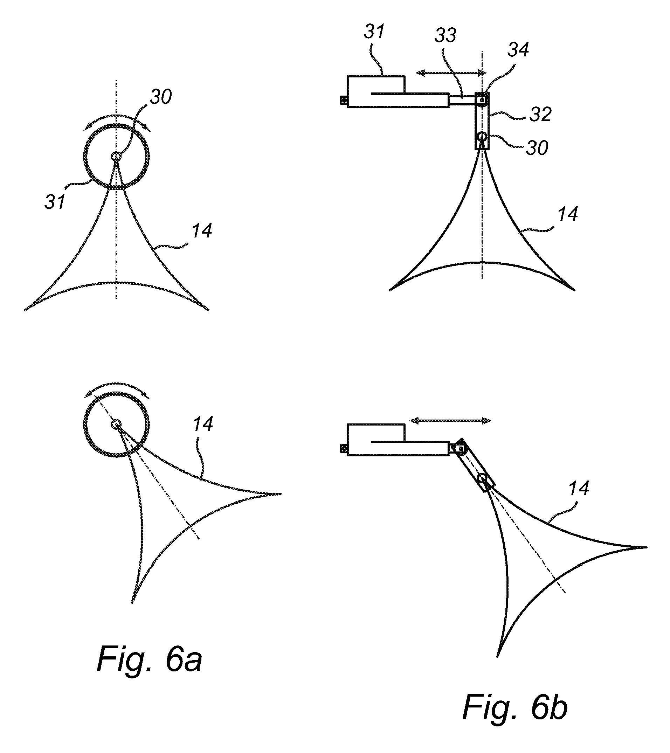

In Fig. 3 there is also illustrated a spreading member 14 according to the present invention, which is placed between the spreader fans 8, essentially on the line of symmetry between them and directly behind the point where the spreader fans 8 are placed closest together. The spreading member 14 is arranged as a generally V-shaped or wedge-shaped plate, with its apex placed forwards and pivotally suspended about a shaft 22. The angle of the plate is formed by the legs of the V and is fixed and adjusted to form the spreading pattern. In this embodiment, the sides of the plate are flat in the vertical direction and also in the horizontal direction. The plate extends backwards in relation to the combine harvester 1 and has an elongate and essentially rectangular extension. In this embodiment the spreading member 14 is not suspended or supporte in any other way than the shaft 22 in order to be as light weight and simple in its design as possible. Below, and illustrated in the Figs. 6a - 6g are embodiments in which the sides of the plate generally follows the curving of the periphery of the spreader fans 8 in the horizontal plane. It may however also be partly straight in the horizontal plane and /or having a non-straight or even broken vertical extension. For stabilization of the spreading member 14, the two sides represented by the legs of the V are connected to a further plate.

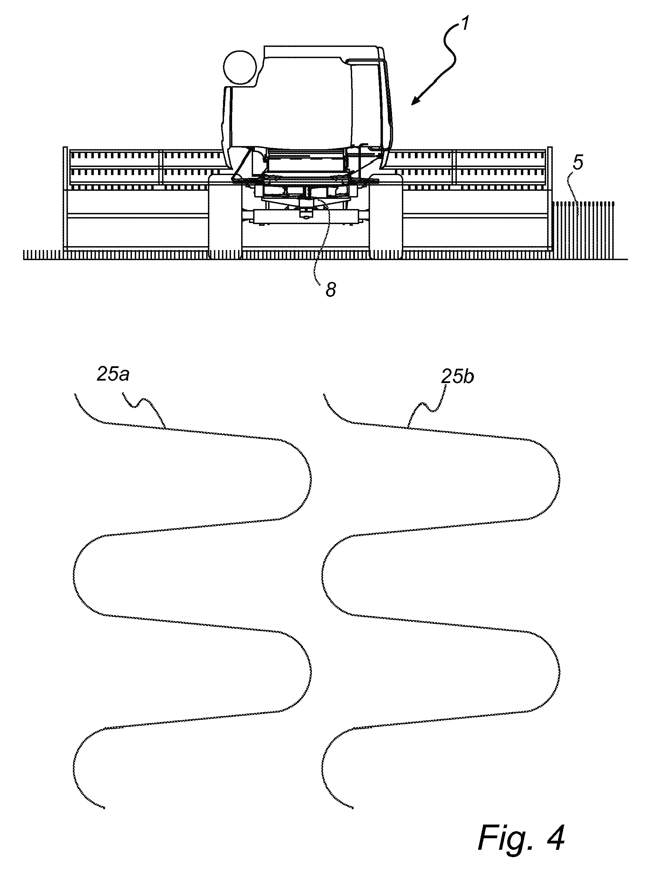

When in use the spreading member 14 normally oscillates by a swinging motion between its two end positions. The harvest residues coming out of the spreader fans 8 meet the vertical walls of the spreading member 14 and are thereby directed more concentrated and thus more efficiently wide over the field 9. The spreading member 14 can also be set to swing more towards its one outer position, if the weather conditions or other factors make this appropriate. In an extreme case, it can be set in a fixed position. Fig. 4 schematically illustrates how the chopped straw is spread over the field 9 when oscillating evenly between its end positions, which generally implies a sinus curve. The fact that the spreading of the straw is controlled by the spreading member 14 after the straw has left the spreader fans 8 in an oscillatory swinging motion over the field 9, as is represented by the schematized windrows 25a and 25b, one windrow from each spreader fan 8, allows a very accurate control of the spreading of the straw. With the spreading member 14 according to the present invention, which is both simple and lightweight, the oscillation can be made fast and easily maneuverable and therefore adaptable to the actual conditions during harvest and can hence spread the straw better. A large number of oscillatory motions of the spreading member 14 mean that two corresponding positions of the schematic windrows 25a, 25b can come very close together.

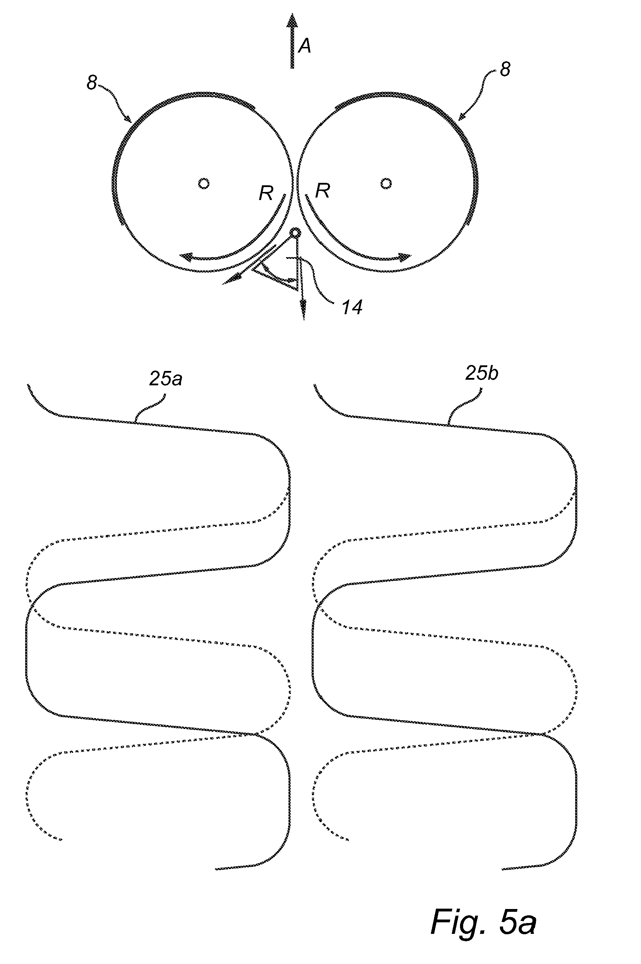

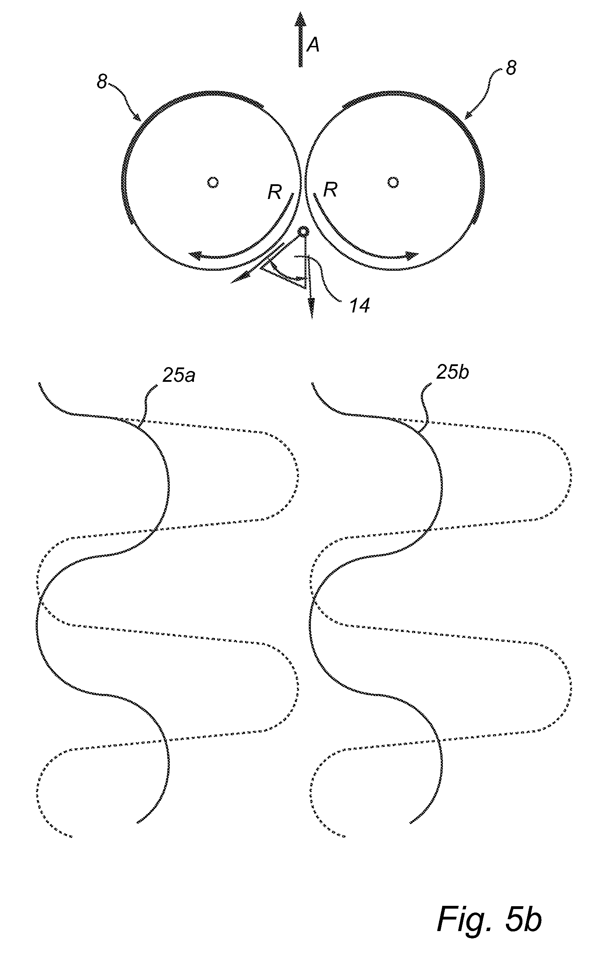

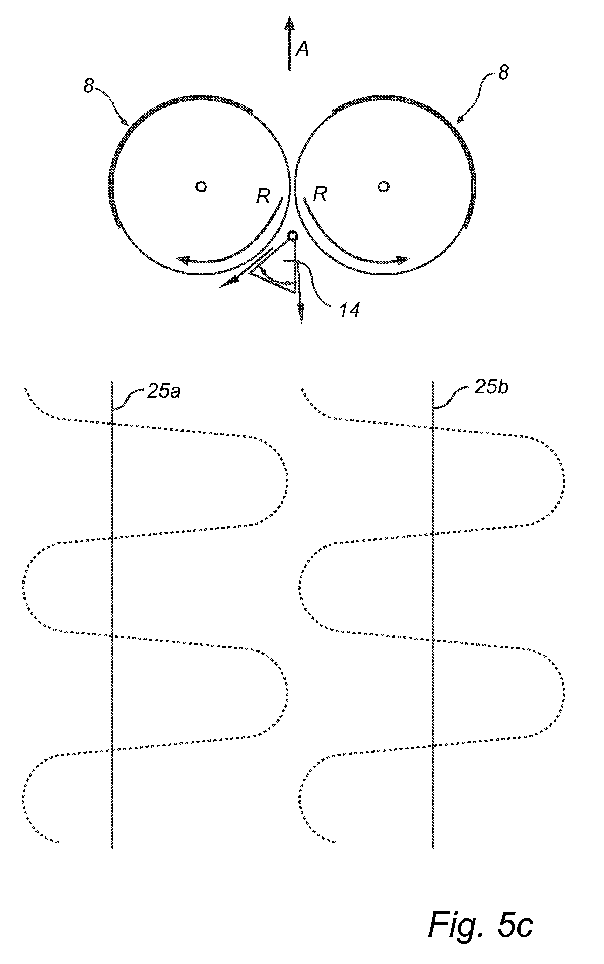

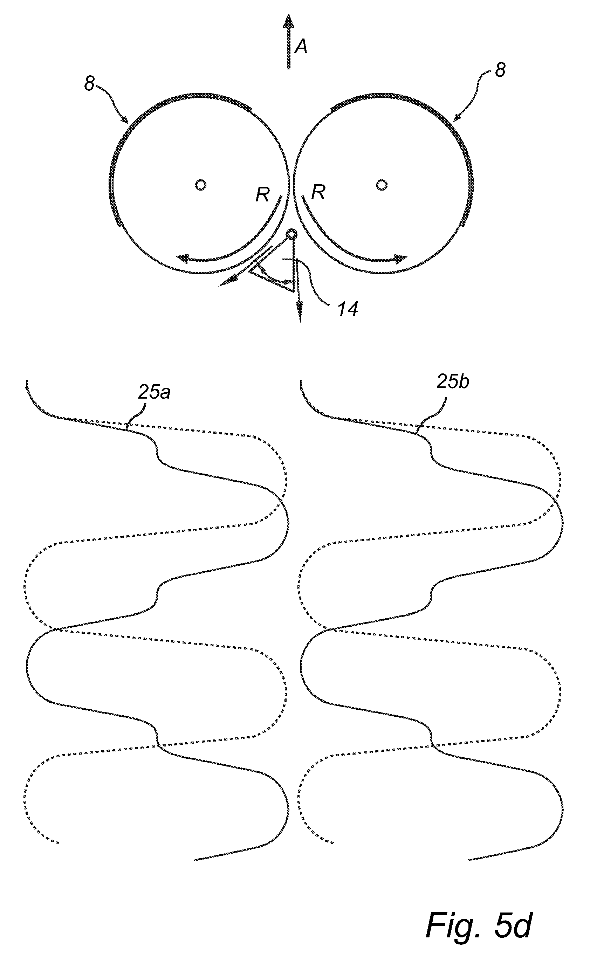

The oscillating movement disclosed in Fig. 4 is a schematic motion in which the oscillation is generally symmetrical between the end positions of the spreading member 14, and generally evenly distributed in each position in and between said end positions. The end positions are located at the outer ends of the combine harvester 1 which is depicted from its rear end in the figure. According to the present invention this movement is instead set by the user at a different movement pattern. In one preferred embodiment the spreading member 14 oscillates symmetrically between the end positions, but rests for a longer dwell time in said end positions than in the other positions. This is schematically shown in Fig. 5a. The dotted line in all Fig. 5 figures represents a symmetrically evenly oscillating movement as in Fig. 4, whereas the continuous line represents the actual oscillation pattern. Instead of the combine harvester 1 as depicted in Fig. 4 only the spreader 8 is schematically illustrated, but the same spreading width as in Fig. 4 is intended for the dotted line. It has been found that a completely evenly oscillating motion, *i.e.* when the dwell time of the spreading member 14 is similar in all positions, including the end positions, the spreading of harvest residues may be still further improved. In order to spread a proportional amount of harvest residues in all positions, *i.e.* in the whole width of the combine harvester 1 and also at the far ends of this width, it is advantageous to let the spreading member 14 rest in its end positions or at least to oscillate at a slower speed in close proximity of the end positions. The time of rest or lower speed in the end positions may be chosen so as to take the speed of travel of the combine harvester 1 into account and this speed may in turn be affected by the amount of crop to harvest from the field 9. This situation arises usually when the weather conditions are generally optimal.

During windy conditions, such as a fresh side breeze, the same effect is needed, but another setting of the spreading member 14 motion may be needed to accomplish the even and wide spread. In such a case it may be advantageous not to let the spreading member 14 oscillate between both its end positions, but rather to oscillate between the end position facing the wind and *i.a.* a mid position between said end positions which is chosen as a consequence of mainly the wind speed and the speed of travel of the combine harvester 1. As in the above discussed case during optimal weather conditions the dwell time in the end position and in positions in the proximity of the end positions may be advantageous to set longer than the dwell time in other positions. It may also be advantageous to set the dwell time in both end positions (of which one in the present embodiment in reality is a mid position as seen in relation to the possible range of oscillation of the spreading member 14) to be longer, although not necessarily both the same dwell time. This oscillation pattern is shown schematically in Fig. 5b.

In Fig. 5c the spreading member 14 is set to be fixed in one of its positions. This position may be any one of the positions in or between the end positions of the spreading member 14. The two illustrated schematized windrows 25a and 25b of this embodiment also indicates that they do not need to be similar. As will be discussed below the two vertical sides of the spreading member 14 do not need to be connected together and may thus oscillate in different ways in dependently of each other. In this embodiment they are thus set in two different fixed positions.

In Fig. 5d yet another oscillation pattern is shown in which the focus of the spreading of harvest residues is in the middle of the combine harvester 1 and at the end positions, in which three positions the dwell time is longer than in the other ones.

Other than the here illustrated oscillation patterns may also be advantageous and the present invention is not limited only to the once illustrated. Especially different combinations of the illustrated embodiments are contemplated, due to the needs of the user.

In order to accomplish the oscillation according to the invention the spreader is provided with *i.a.* a drive unit 31. Different types of drive units 31 and accompanying parts for the spreader, all according to the present invention, are shown in the Figs. 6a - 6e. In all of these figures the upper part shows the embodiment in a symmetrically positioned position when the spreading member 14 is directing chopped straw and other harvest residues in equal amounts to the back and to the sides of the combine harvester 1. In the lower part the same embodiment of the spreading member 14 is shown in an end position in which shopped straw and any other harvest residues are directed on one side of the spreading member 14 almost straight astern of the combine harvester, and on the other side of the spreading member 14 almost perpendicularly to the direction of travel of the combine harvester 1, *i.e.* as much to the side as possible.

In Fig. 6a a first embodiment of a spreader according to the invention is disclosed. The spreading member 14 comprises in this embodiment two flat vertical plates which along one up stream axis 30 (which corresponds to the axis 22 in Fig. 3) are connected to each other, and the plats are slightly rounded in order to follow the curvature of the spreader fans 8. The spreading member is made of pained steel sheets and the connection is accomplished by welding. In this embodiment the two plates are connected with each other at each down stream end by a connecting plate which functions as a stiffening element of the spreading member 14. Also said connecting plate is welded to the plates. The vertical height of the spreading member plates is suitably 15 - 20 cm. The length of each plate in the horizontal direction along the path of the spread harvest residues is approx. 30 - 40 cm. The spreading member 14 is suspended at its up stream end along said vertical axis 30, to which axis the drive unit 31 is connected. The maximum oscillation movement between the end positions is approx. 90°, *i.e.* approx. 45° from the symmetry line to one end position. To complete one oscillation cycle from *i.a.* one end position to the other and back 0.5 s is needed. The drive unit 31 is in this embodiment a rotational motor 31which is controlled by a processor for accomplishment of the different oscillation patterns which have been described in connection with Figs. 5a - 5d. The processor can in turn be controlled and/or programmed by the user of the spreader and of the combine harvester 1. In a preferred embodiment the control of the processor may be affected in the cabin of the combine harvester 1. The drive unit 31 is furthermore connected to the hydraulic system of the combine harvester 1for energy.

In Fig. 6b an embodiment of the invention is disclosed in which the spreading member 14 is similar to the embodiment in Fig. 6a. The spreading member 14 is suspended as in Fig. 6a, but is also provided with a lever 32 of approx. 5 - 10 cm length. The lever 32 is symmetrically and fixedly connected to the spreading member 14 at the up stream axis 30 and is directed in the horizontal plane forwards towards the combine harvester 1. At the forward end of the lever 32 the drive unit 31 is connected such that the angle can be altered between the drive unit 31 and the lever 32. In this embodiment the drive unit 31 is an electrically driven linear motor 31. The linear motor 31 is connected to one end of a horizontal shaft 33 and the other end of the shaft 33 is connected as above described to the lever 32. The linear motor 31 drives the shaft 33 in an oscillating manner forwards and backwards. The shaft 33 is positioned such that the angle between the shaft 33 and the lever 32, when the spreading member 14 is in its mid position, is 90°. In other words, the shaft 33 is positioned crosswise in relation to the combine harvester 1. Also in this case the drive unit 31 may be controlled by a user controlled or -programmed processor from *i.a.* the cabin of the combine harvester 1. The linear motor 31 could also be driven by a pneumatical or hydraulical system.

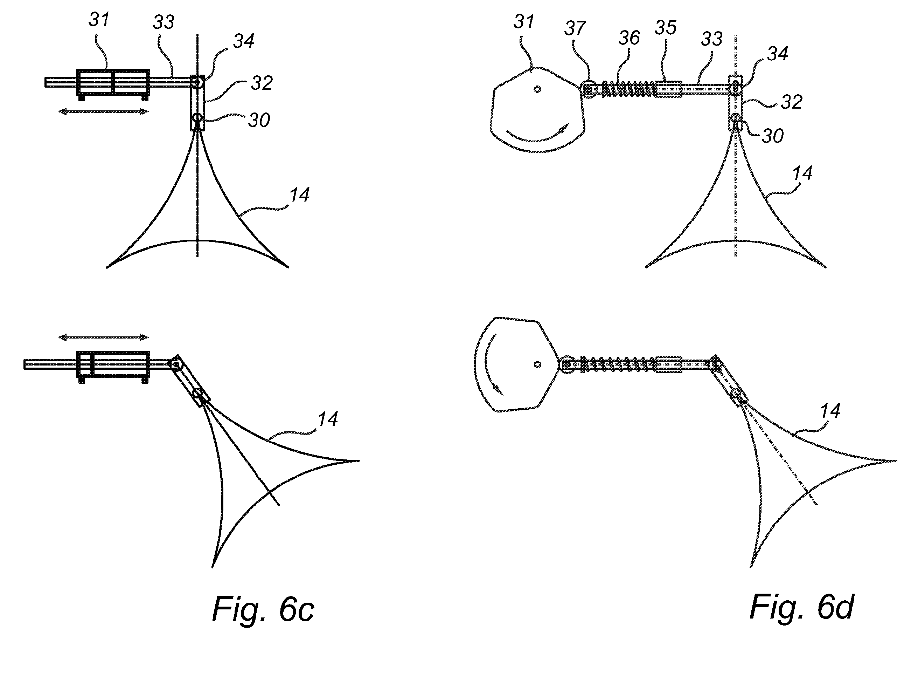

In Fig. 6c another embodiment of the invention is disclosed which also has a shaft 33 which is horizontal and located crosswise in relation to the combine harvester 1 and which is connected to a lever 32 on the spreading member 14. In this embodiment the different dwell times is accomplished by a drive unit 31 driving the oscillating shaft 33 back and forth and the different oscillations patterns as earlier described. The drive unit 31 is either a pneumatical or hydraulical cylinder. A combination of these types of drive could also be utilized.

Another embodiment is shown in Fig. 6d in which the spreading member 14 is provided with a shaft 33 and the drive unit 31 is a rotating eccentric disk 31 which one end of the shaft 33 abuts at all times via a roller 37 positioned at the very end of the shaft 33. The shaft 33 is held in a fixed vertikal and angular position by a collar 35 which is fastened in a fixed position to the spreader of the combine harvester 1. The collar 35 encircle the shaft 33 and in positioned between the roller 37 and the fastening point 34 to the lever 32. Between the roller 37 and the collar 35 is a spiral spring 36 provided which also encircles the shaft 33. The length and stiffness of the spiral spring 36 is chosen so as to urge the shaft 33 towards the excentric disk 31, and to at all times to keep the roller 37 in abutment with the excentric disk 31. One full rotation of the excentric disc 31 represents one oscillation cycle of the spreading member 14. The excentricity of the excentric disc 31 in combination with its speed of rotation are determining the oscillation and dwell time in all positions of the spreading member 14.

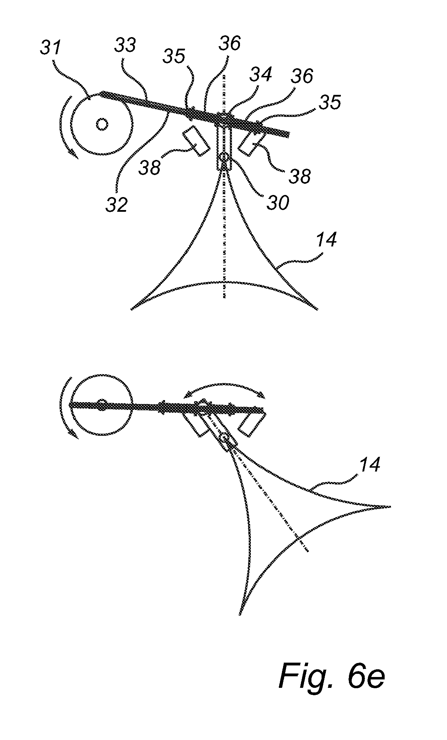

In Fig. 6e a further emobidiment of the invention is disclosed. In contrast to the embodiment in Fig. 6d, the disc 31 is in this embodiment fully circular. The shaft 33 is not abutting the disc 31 via a roller, but is connected to a point along (or close to) the periphery of the disc 31 such that the position is fixed, but the angular relationship between the disk 31 and the shaft 33 is adaptable when the disc 31 is rotating. The shaft 33 is in this embodiment reaching beyond the connecting point 34 with the lever 32 of the spreading member 14, and on both sides of the connection point 34 a spiral spring 36 is provided, thus in total two spiral springs 34. At the ends of the spiral springs 36 which face away from the connecting point 34 with the lever 32 the spiral springs 36 are fixedly attached to the shaft 33 by a sleeve 35. The opposite ends of the spiral springs 36 are abutting and pressing against the connecting point 34 and are otherwise free to be compressed or released along the shaft 33. It is noted that other known types of springs 36 may be utilised for this effect. The springs 36 also do not need to encircle the shaft 33 as long as the pressing action as desicribed in accomplished.

In combination with this embodiment two blocking elements 38 are provided in the form of rectangular and vertically positioned stops 38. The stops 38 are positioned along the axial extension of the lever 32 and symmetrically around the axis 30 around which the spreading member 14 is oscillating. The angular distance between the two stops 38 is in this embodiment 72.0°. This corresponds to a dwell time in each end position of 0.0625 s when the oscillation motion is 0.5 s, which is approx. 1/8 of the total oscillation motion time. Other angular distances may be utilized in order to accomplish other dwell times in the end positions. The angular distance may be altered by the user by moving the stops 38 to other angular distances, and these may furthermore be positioned non-symmetrically at different angular distances from the line of symmetry. In this embodiment two stops 38 are present, but only one stop 38 may also be provided at the choice of the user. During oscillation the shaft 33 will drive the lever 32 to oscillate between its two end positions, which however lye outside of the range defined by the stops 38. When the lever 32 comes close to one stop 38, and abuts the stop 38, the oscillation is almost momentarily and temporarily hindered. The drive unit 31 and the shaft 33 however continue their continuous oscillation. This effect may be accomplished since the shaft 33 is provided with the spiral springs 36 as described above, which when either one is compressed let the shaft 33 continue the continuous oscillation whilst the lever 32 and thus the spreading member 14 is temporarily stopped. The stopping effect is brought to an end when the oscillation movement of the shaft 33 is in the same position as when abutting the stop 38, but in the opposite direction. This effect is present at both end positions.

This embodiment functions in a similar general manner as other embodiments in that the stops 38 maintain the spreading member 14 in its end positions for a longer dwell time than in the other positions. In this case however, the shaft 33 is not only oscillating back and forth in a straight path, but the end which is connected to the disc 31 follws the rotation thereof, whereby the shaft 33 also completes a movement in the direction perpendicular to the first one occurs. This does not affect the oscillation motion of the spreading member 14 however, since the shaft 33 in its opposite end is guided by the lever 32 to only move in the first direction.

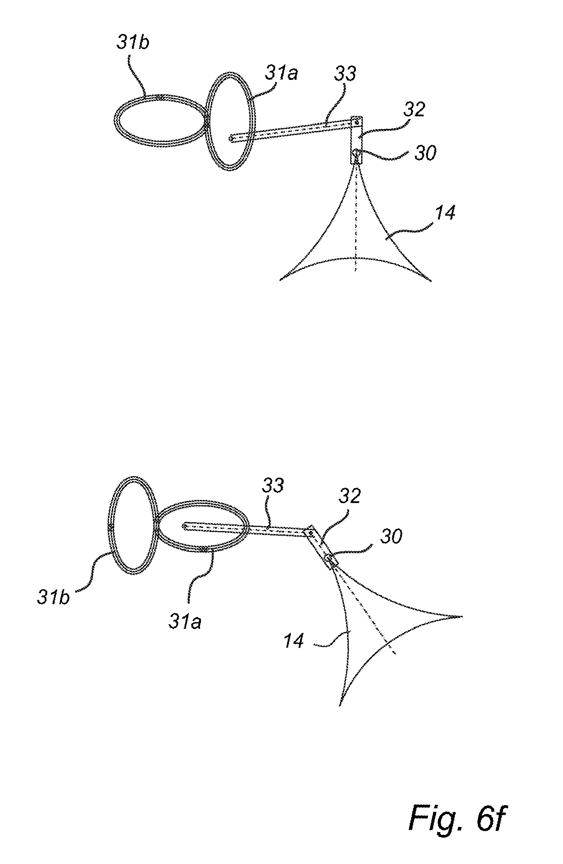

In the alternative embodiment which is illustrated in Fig. 6f the drive unit 31 comprises two eliptical gear wheels 31 a and 31 b. The shaft 33 is coupled to the first gear wheel 31 a in or close to one of the focal points. Both gear wheels 31 a and 31 b are suspended in their centre points. The position of the two gear wheels 31 a and 31 b in relation to each other is that one is displaced or rotated 90° such that the long axis of one gear wheel is parallel to the short axis of the other gear wheel. It is noted that the wheels 31 a and 31 b do not need to comprise gears, but any engaging surface that is suitable to transfer the forces to drive the spreading member 14. Furthermore, the wheels 31 a and 31 b do not need to engage each other at the outer perifery, but may be designed in any manner accomplishing the intended oscillation pattern, and the exact curvature of the engagement surfaces of the gear wheels 31 a and 31 b need not be elliptical, but having any "ellipse-like" design which corresponds to the sought oscillation pattern.

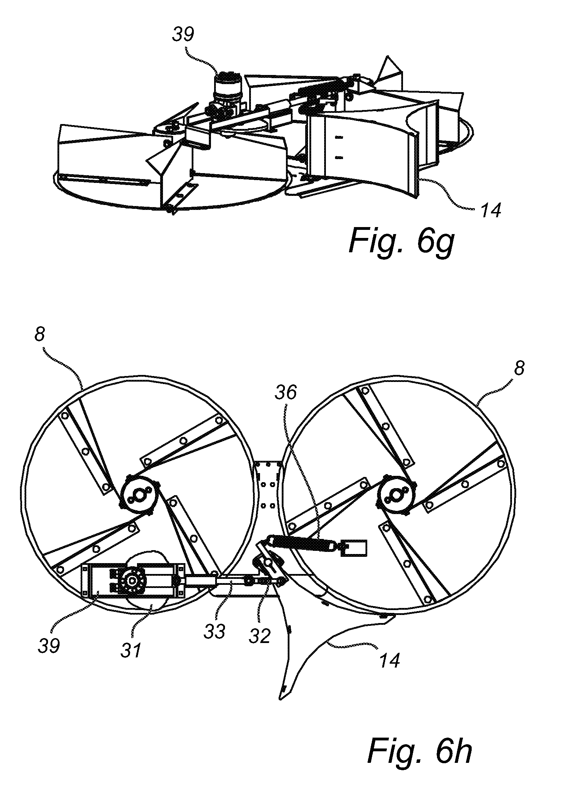

As an alternative of a compression spring 36 as in the embodiment disclosed in Fig. 6d a tension spring 36 may be utilsed. Such an embodiment is shown in Figs. 6g and 6h. In this case the lever 32 is penetrating symmetrically from the suspension axis 30 of the spreading member 14 in to opposite directions. On one end of the lever 32 the shaft 33 is connected as discussed in relation to Fig. 6d, and on the other end a tension spiral spring 36 is attached, which is directed away from the shaft 33 in the opposite direction and is also firmly attached at its other end to the spreader of the combine harvester 1. Instead of using the compression spring 36 as in Fig. 6d, the present embodiment needs another mechanism for keeping the roller 37 to the side of the excentric disc 31. In the present embodiment an otherwise known elastically clamping mechanism 39 holds the shaft 33 firmly to the side of the excentric disc 31, but lets the shaft 33 follow the outer edge thereof during rotation.

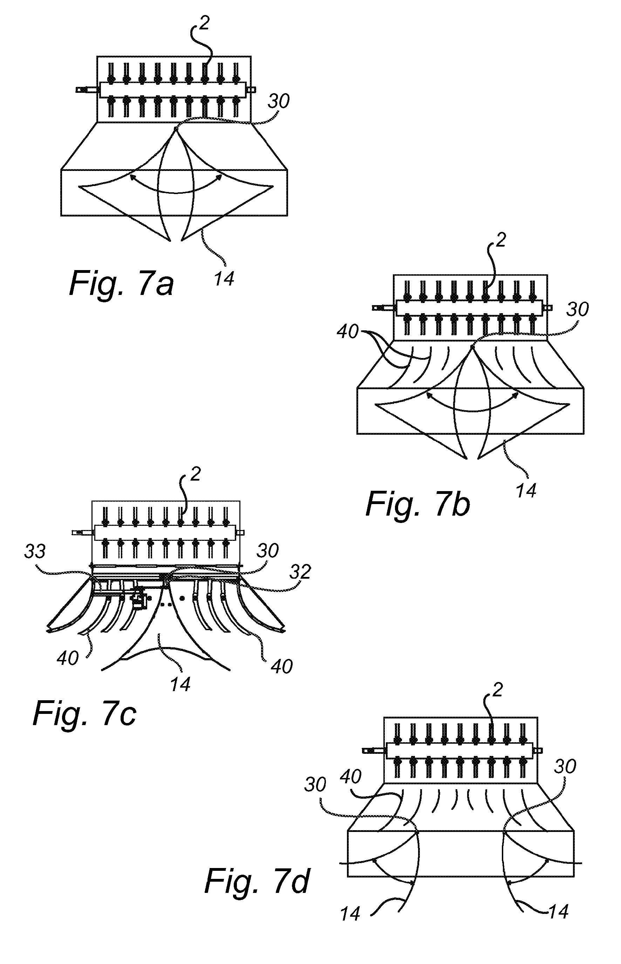

According to an alternative embodiment of the present invention the combine harvester 1 is equipped according to Fig. 1 in so far as it does not have any spreading fans 8 behind the straw shopper 2. However, the combine harvester 1 is anyway equipped with a spreading member 14 according to any one any combination of embodiments of the present invention. The spreading member 14 is in these embodiments positioned directly behind the straw chopper 2 such that the added spread still may be utilized. Also in this embodiment the effect of the spreading member 14 according to the present invention is utilized and may be designed as has been described above. For a schematic top view of such embodiments see Figs. 7a - 7c. In all these figures is the spreading member 14 illustrated in both its end positions and the arrow there between is merely an indication of the oscillation path. In Fig 7a the spreading member 14 is symmetrically positioned behind the straw chopper 2. In Fig. 7b there are also adjustable spreader wings 40 which help to direct the straw from the straw chopper 2 towards the sides of the combine harvester 1. In the centre part there are no wings 40, but instead the spreading member 14 is suspended. A more detailed view on such an embodiment is disclosed in Fig. 7c, in which the drive unit is similar to the one in Fig. 6b.

The spreading member 14 may not only be a generally V-shaped device, but may also comprise either one or two straw stream deflector(s) which are either positioned symmetrically in close proximity of the symmetry line of the straw chopper 2, one at each side of a symmetrically positioned dividing panel and oscillating either in common or independently of the other, each having a common or its own drive unit 31, or positioned one at each outer end (*i.e*. at the sides of the combine harvester 1) of the straw chopper 2 - or in case of spreader fans 8 - at the outer ends thereof. In the event of the latter the straw stream deflectors may also be driven either independently or dependently of each other. See Fig. 7d in which the spreading member 14 is divided into two independently oscillating straw stream deflectors. In case of a dividing panel, this may also be used with or without spreading fans 8. Such a dividing panel may be a fixedly positioned vertical wall which extends in the direction of travel the combine harvester 1 and which is used to make sure that the straw and harvest residues are equally spread to the corresponding sides behind the combine harvester 1. The spread width is improved by the existence of a spreading member 14 according to the present invention.

It is also contemplated that the straw stream deflector (s) including the embodiments of the V-shaped spreading member 14 may not be completely flat in the vertical direction. It may i.a. have a grooved surface in which the grooves extends as ridges in the horizontal direction in order to keep the horizontal flow of chopped straw and any other harvest residues for as long as they are guided by the deflector. Other surface modifications could also be present as long as they improve or at least not impair the flow of chopped straw in the essentially horizontal direction of the deflector.

## Claims

1. A spreader for spreading straw and other harvest residues over ground, comprising a straw chopper (2) having an inlet for unchopped straw and an outlet (21) for chopped straw which is essentially horizontally directed, and down streams of said outlet (21) an oscillating spreading member (14) comprising an elongate straw stream deflector which is pivotally mounted in an outlet (21) facing end thereof and driven in an essentially horizontal plane over ground by a drive unit (31) between two end positions, **characterised in that** said drive unit (31) is adapted to drive said spreading member (14) such that the dwell time in at least one position at or between said end positions is different than the dwell time in an other position.

2. A spreader according to claim 1, wherein said drive unit (31) comprises a drive shaft (33) which at a first end is connected to said spreading member (14) by a pivot (34) via a lever (32), which lever (32) is rigidly connected to the spreading member (14).

3. A spreader according to claim 2, wherein adjacent to said pivot (34) at least one side thereof a damping mechanism is provided which at its away from said pivot (34) facing ends is fixedly fastened to said drive shaft (33) and at is pivot (34) facing ends is abutting said pivot (34), the spreader further comprising at least one blocking element (38) positioned such that said lever (32) in the vicinity of at least on of said end positions of said spreading member (14) is abutting said blocking element (38) in order to restrain the oscillation of the spreading member (14) in said end position.

4. A spreader according to any one of the above claims, wherein said drive shaft (33) at a second end is eccentrically connected to a driven rotor (31).

5. A spreader according to claim 4, wherein said rotor (31) is a wheel (31).

6. A spreader according to claim 5, wherein said rotor (31) is circular.

7. A spreader according to any one of the above claims, wherein said damping mechanism comprises a spring (36).

8. A spreader according to any one of the above claims, further comprising at least one spreader fan (8) positioned upstreams of said spreading member (14).

9. A spreader according to any one of the above claims, wherein said spreading member (14) comprises two elongate, essentially rectangular straw stream deflectors.

10. A spreader according to claim 9, wherein said straw stream deflectors are mounted in an essentially V-shape.

11. A spreader according to claim 10, wherein said straw stream deflectors are driven by the same drive unit (31).

12. A spreader according to any one of the above claims, wherein each straw stream deflector is curved.

13. A spreader according to any one of the above claims, wherein each straw stream deflector is mounted centrically in relation to said outlet (21).

14. A combine harvester (1) comprising a spreader according to any one of claims 1-13.
